# EUROPÄISCHE PATENTANMELDUNG

(11) **EP 3 993 241 A1**
(43) Veröffentlichungstag der Anmeldung: **04.05.2022**
(21) Anmeldenummer: 21205487.8
(22) Anmeldetag: 29.10.2021
(51) Int. Cl.: H02K 41/03

(54) **SEKUNDÄRTEIL FÜR EINEN LINEARMOTOR, LINEARMOTOR UND BAUKASTEN FÜR EINEN LINEARMOTOR MIT MAGNETKÖRPERN UND ERSATZKÖRPERN**

(30) Priorität: 30.10.2020 DE 202020106227 U
(71) Anmelder: SCHUNK Electronic Solutions GmbH, 78112 St. Georgen (DE)
(72) Erfinder: Ruggieri, Patrick, 78647 Trossingen (DE); Liehr, Matthias, 78048 Villingen (DE)
(74) Vertreter: DREISS Patentanwälte PartG mbB

(57) **Zusammenfassung**

Sekundärteil (112) für einen Linearmotor (100), wobei das Sekundärteil (112) eine entlang einer Achse (116) verlaufende Magnetrückschlussschiene (118) und eine Vielzahl von an der Magnetrückschlussschiene (118) vorgesehenen, quer oder schräg zur Achse (116) verlaufend angeordneten, permanentmagnetisierten Magnetkörpern (120) zum Zusammenwirken mit einem Primärteil (114) aufweist, wobei zwischen jeweils zwei Magnetkörpern (120) mit gleicher Polarisierung ein Magnetkörper (120) mit anderer Polarisierung vorgesehen ist, **dadurch gekennzeichnet,** dass wenigstens zwischen zwei Magnetkörpern (120) mit gleicher Polarisierung ein nicht permanentmagnetisierter Ersatzkörper (124) vorgesehen ist.

## Beschreibung

Die Erfindung betrifft ein Sekundärteil für einen Linearmotor, einen Linearmotor und einen Baukasten für einen Linearmotor, wobei das Sekundärteil eine entlang einer Achse verlaufende Magnetrückschlussschiene und eine Vielzahl von in oder an der Magnetrückschlussschiene vorgesehenen, quer oder schräg zur Achse verlaufend angeordneten, permanentmagnetisierten Magnetkörpern zum Zusammenwirken mit einem Primärteil aufweist, wobei zwischen jeweils zwei Magnetkörpern mit gleicher Polarisierung ein Magnetkörper mit anderer Polarisierung vorgesehen ist.

Derartige Linearmotoren und zugehörige Sekundärteile sind aus dem Stand der Technik in vielfältiger Art und Weise bekannt. Die Magnetfelder des Primärteils, also des Läufers, und des Sekundärteils, also des Stators, werden dabei im Betrieb immer so miteinander kombiniert, dass das Primärteil ein Wegstück "nach vorne" gezogen wird und vom Magnetfeld hinter sich abgestoßen wird. Hat das Primärteil die Position erreicht, zu der es gezogen wurde, so wird umgepolt, und das Primärteil wird von dieser Position wegedrückt und zum nächsten Magnetkörper hingezogen. Dadurch, dass das Primärteil zwei oder mehr etwas versetzte Magnetfelderzeuger besitzt, befindet sich immer mindestens einer davon gerade "auf halbem Weg", was eine Festlegung der Laufrichtung, also vorwärts oder rückwärts, ermöglicht.

Bei den bekannten Sekundärteilen sind die Magnetkörper in der Regel in die Magnetrückschlussschiene oder auf die Magnetrückschlussschiene aufgeklebt. Um die Magnetrückschlussschiene an einem Basisteil, beispielweise einem Basis- oder Gehäuseteil, befestigen zu können, ist es bekannt, seitlich neben den Magnetkörpern in der Magnetrückschlussschiene Bohrungen vorzusehen, durch welche Befestigungsschrauben geführt werden können. Derartige Sekundärteile werden von der Firma HIWIN GmbH, 77654 Offenburg, unter der Bezeichnung Statoren für HIWIN-Linearmotoren, beispielsweise LMSA1S3, vertrieben.

Dabei ist zu berücksichtigen, dass die Magnetkörper vergleichsweise empfindlich sind und dass es nicht ohne Weiteres möglich ist, Magnetkörper zu deren Befestigung insbesondere spanabhebend zu bearbeiten, da das Material ist sehr spröde und zerbrechlich ist. Zudem entsteht leicht entflammbarer Bohrstaub. Die lokal am Bohrer entstehende Hitze kann das Material entmagnetisieren. Ferner sind die Magnetkörper wegen der fehlenden Beschichtung am Bohrloch nicht mehr gegen Korrosion geschützt.

Der vorliegenden Erfindung liegt die Aufgabe zugrunde, ein Sekundärteil der eingangs genannten Art bereitzustellen, das vergleichsweise klein baut, und das dennoch funktionssicher an einem Basisteil befestigt werden kann.

Dazu ist vorgesehen, dass wenigstens zwischen zwei Magnetkörpern mit gleicher Polarisierung ein nichtpermanentmagnetisierter Ersatzkörper vorgesehen ist. Eine Befestigung der Magnetrückschlussschiene an einem Basisteil kann folglich dann über den Ersatzkörper erfolgen. Dadurch, dass der Ersatzkörper nicht-permanentmagnetisiert ist, kann dieser ein geeignetes Material zur Bearbeitung und Befestigung an der Magnetrückschlussschiene aufweisen.

Dabei ist vorteilhaft, wenn die sich quer zur Achse erstreckende Breite der Magnetrückschlussschiene gleich oder kleiner ist als die sich quer zur Achse erstreckende Breite der Magnetkörper. Dies hat den Vorteil, dass das Sekundärteil insgesamt sehr schlank baut.

Weiter ist vorteilhaft, wenn die Magnetkörper und die Ersatzkörper jeweils Längsseiten und Schmalseiten aufweisen und wenn die Ausbildung so ist, dass bei zwei nebeneinander angeordneten Sekundärteilen die einander zugewandten Schmalseiten aneinander angrenzen. Die Schmalseiten verlaufen dabei vorzugsweise parallel zur Achse. Die einander zugewandten Schmalseiten nebeneinander angeordneter Magnetkörper können sich dabei berühren oder zumindest fast berühren. Eine derartige Ausbildung hat den Vorteil, dass mehrere Sekundärteile nebeneinander angeordnet werden können, so dass die Magnetkörper bei nebeneinander angeordneten Sekundärteilen aneinander angrenzen, wodurch aus zwei oder mehreren nebeneinander angeordneten Sekundärteilen ein größeres Sekundärteil ausgebildet werden kann.

Vorteilhaft ist, wenn der wenigstens eine Ersatzkörper aus einem ferromagnetischen Material, insbesondere aus einem Eisen- oder Stahlmaterial ist. Durch Verwendung eines solchen Materials kann der Magnetfluss durch den Ersatzkörper geschlossen werden, wenn auch mit einem geringeren Wirkungsgrad als bei der Verwendung eines Magnetkörpers anstelle des Ersatzkörpers. Dennoch ist der durch Vorsehen des Ersatzkörpers entstehende Verlust vergleichsweise gering.

Vorteilhafterweise hat der wenigstens eine Ersatzkörper die gleichen Abmessungen wie die benachbarten Magnetkörper. Besonders vorteilhaft ist, wenn alle Magnetkörper und alle Ersatzkörper identische Abmessungen haben. Insgesamt ergibt sich dann eine gleichmäßige Ausbildung des Sekundärteils.

Der wenigstens eine Ersatzkörper hat vorzugsweise wenigstens ein Durchgangsloch, wobei die Magnetrückschlussschiene wenigstens ein mit dem Durchgangsloch korrespondierendes Befestigungsloch aufweist. Die Ausbildung ist dabei vorzugsweise so, dass der wenigstens eine Ersatzkörper mittels Befestigungsschrauben an der Magnetrückschlussschiene und vorzugsweise auch die Magnetrückschlussschiene dadurch an einem Basisteil befestigt werden kann oder befestigt ist. Die Befestigungsschrauben können also durch den Ersatzkörper und durch die Magnetrückschlussschiene bis zum Basisteil hindurchreichen. Dadurch kann eine funktionssichere Befestigung bereitgestellt werden, ohne dass hierfür Bauraum zur Verfügung zu stellen ist.

Der wenigstens eine Ersatzkörper kann auch aus einem nicht-ferromagnetischen Material sein, wobei dann vorzugsweise die Befestigungsschrauben aus einem ferromagnetischen Material sind. Es hat sich gezeigt, dass zum Schließen des Magnetflusses ausreichend sein kann, wenn die Befestigungsschrauben aus einem ferromagnetischen Material sind.

Die einzelnen Magnetkörper sind vorzugsweise mittels einer Klebeverbindung an oder auf der Magnetrückschlussschiene befestigt. Dadurch werden die Magnetkörper, und insbesondere deren Beschichtungen, durch die Befestigung nicht beschädigt.

Ferner hat sich als vorteilhaft gezeigt, wenn entlang der Achse jeweils zwischen zwei Ersatzkörpern zwei, drei, vier, fünf, sechs oder sieben Magnetkörper vorgesehen sind. Besonders vorteilhaft hat sich herausgestellt, wenn zwischen zwei Ersatzkörpern jeweils sechs Magnetkörper platziert sind. Die Anzahl der jeweiligen Magnetkörper zwischen den Ersatzkörpern hängt dabei insbesondere von der Art der Kombination der Magnetkörper sowie der Spalte zwischen den einzelnen Magnetkörper ab.

Die eingangs genannte Aufgabe wird auch gelöst durch einen Linearkörper, der ein erfindungsgemäßes Sekundärteil und ein bestrombares Primärteil aufweist, das entlang des Sekundärteils verfahrbar angeordnet ist. Ein solcher Linearmotor kann auch ein Basisteil zur Befestigung der Magnetrückschlussschiene vorsehen.

Ferner ist vorteilhaft, wenn mehrere hintereinander und/oder nebeneinander angeordnete Sekundärteile Verwendung finden. Durch das Vorsehen mehrerer Sekundärteile kann also ein Linearmotor bereitgestellt werden, der vergleichsweise groß bauen kann, obwohl einzelne Sekundärteile vergleichsweise klein bauen.

In diesem Zusammenhang schlägt die Erfindung auch einen Baukasten für einen erfindungsgemäßen Linearmotor vor, wobei der Baukasten ein Primärteil und eine Auswahl von mehreren erfindungsgemäßen Sekundärteilen beinhaltet.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: einen Linearmotor mit einem Sekundärteil gemäß dem Stand der Technik;
- Figur 2: eine Draufsicht auf zwei Sekundärteile gemäß dem Stand der Technik;
- Figur 3: ein erfindungsgemäßes Sekundärteil in perspektivischer Ansicht;
- Figur 4: einen erfindungsgemäßen Linearmotor mit einem Sekundärteil gemäß Figur 3 und einem Primärteil; und
- Figur 5: mehrere nebeneinander angeordnete Sekundärteile gemäß Figur 3 und 4.

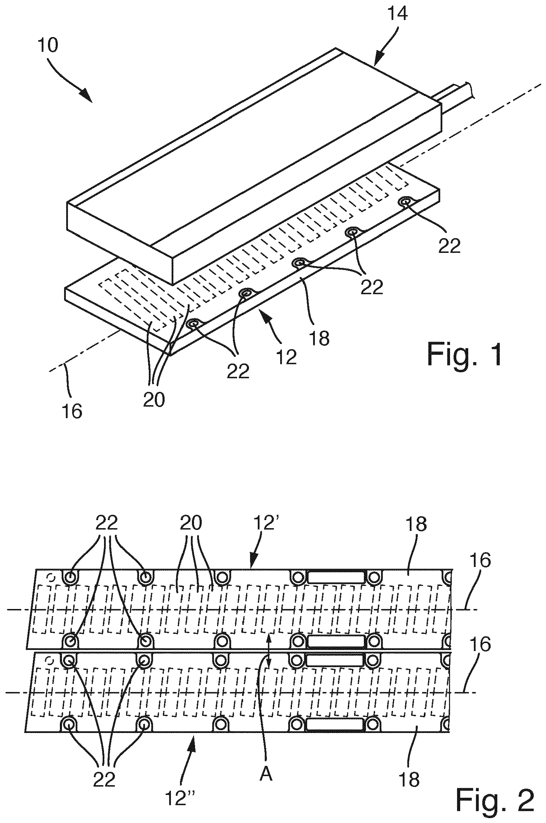

Figur 1 zeigt einen Linearmotor 10 gemäß dem Stand der Technik, der ein Sekundärteil 12 und ein Primärteil 14 umfasst. Das Sekundärteil 12 weist eine entlang einer Achse 16 verlaufende Magnetrückschlussschiene 18 auf, an der eine Vielzahl von Magnetkörpern 20 vorgesehen sind. Die Magnetkörper 20 können dabei in die Magnetrückschlussschiene 18 eingelassen, eingeklebt oder aufgeklebt sein.

Die einzelnen Magnetkörper 20 sind permanentmagnetisiert, haben identische Abmessungen und sind derart angeordnet, dass entlang der Achse 16 die dem Primärteil 14 zugewandte Seite der Magnetkörper 20 eine wechselnde Polarisierung aufweisen. Demnach ist zwischen zwei Magnetkörpern mit hin zum Primärteil 14 gerichteter gleicher Polarisierung jeweils ein Magnetkörper 20 mit einer hin zum Primärteil 14 gerichteten anderen Polarisierung vorgesehen. Insgesamt ergibt sich folglich entlang der Achse 16 eine hin zum Primärteil 14 gerichtete wechselnde Nordpol-Südpol-Polarisierung der Magnetkörper 20.

Zur Befestigung des Sekundärteils 12 an einem in der Figur 1 nicht dargestellten Gehäuse- bzw. Basisteil weist die Magnetrückschlussschiene 18 zwischen ihrem parallel zur Achse 16 verlaufenden Rand und den Magnetkörpern 20 Befestigungslöcher 22 auf.

Wie aus Figur 2 deutlich wird, in der zwei Sekundärteile 12 nebeneinander angeordnet dargestellt sind, sind die Magnetkörper 20 leicht schräg zur jeweiligen Achse 16 angeordnet. Die Magnetkörper 20 des einen Sekundärteils 12' sind dabei quer zu den Achsen 16 zu den Magnetkörpern 20 des anderen Sekundärteils 12'' um einen Abstand A voneinander beabstandet. Der Abstand A resultiert daraus, dass die Befestigungslöcher 22 seitlich neben den Magnetkörpern 20 vorgesehen sind. Eine andere Anordnung der Befestigungslöcher 22 scheidet aufgrund der vorgesehenen Magnetkörper 20 aus. Auch eine Befestigung durch die Magnetkörper 20 hindurch ist nicht möglich, da die Magnetkörper aufgrund ihrer Permanentmagnetisierung vergleichsweise empfindlich und nicht oder nur sehr schwerlich bearbeitbar sind.

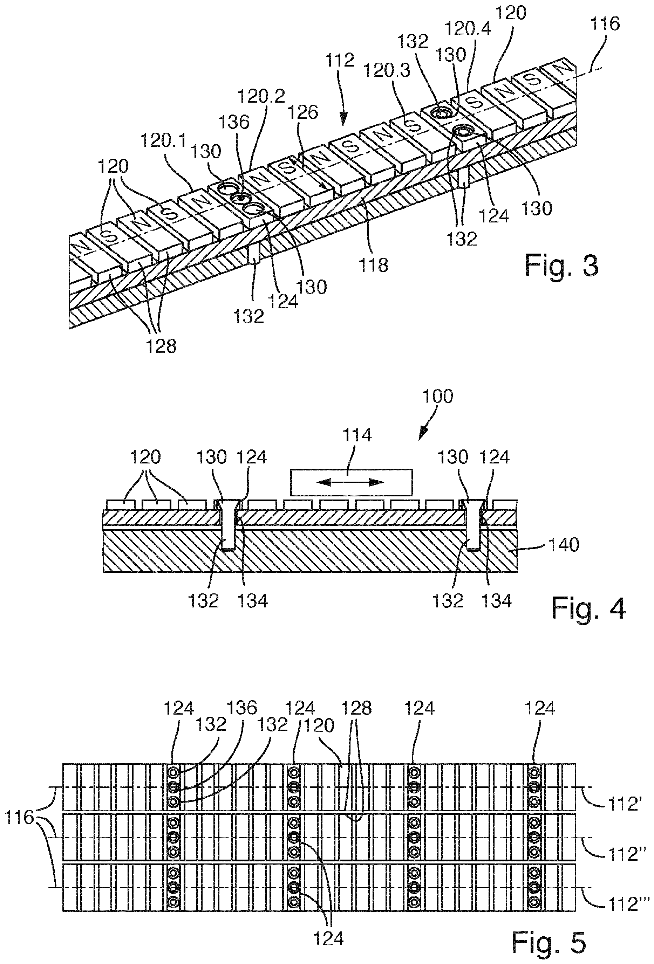

In der Figur 3 ist ein erfindungsgemäßes Sekundärteil 112 gezeigt, dass eine Magnetrückschlussschiene 118 und auf der Magnetrückschlussschiene 118 angeordnete Magnetkörper 120 aufweist. Die Magnetkörper 120 sind dabei insbesondere mittels einer Klebeverbindung auf der Magnetrückschlussschiene 118 befestigt. Zwischen den Magnetkörpern 120.1 und 120.2 sowie zwischen den Magnetkörpern 120.3 und 120.4 sind jeweils keine permanentmagnetisierten Magnetkörper, sondern nichtpermanentmagnetisierte Ersatzkörper 124 vorgesehen. Die Ersatzkörper 124 sind vorzugsweise aus einem ferromagnetischen Material, wie beispielsweise einem Eisen- oder Stahlmaterial.

Wie aus Figur 3 deutlich wird, sind zwischen den beiden Ersatzkörpern 124 sechs Magnetkörper 120 vorgesehen, die jeweils eine hin zum Primärteil weisende, abwechselnde Nordpol- und Südpol-Polarisierung aufweisen.

Wie aus Figur 3 ebenfalls deutlich wird, weisen die Magnetkörper 120 und die Ersatzkörper 124 identische Abmessungen auf. Ferner wird aus Figur 3 deutlich, dass die sich quer zur Achse 116 erstreckende Breite 126 der Magnetkörper 120 gleich oder geringfügig größer ist als die sich quer zur Achse 116 erstreckende Breite der Magnetrückschlussschiene 118. Dies hat den Vorteil, dass, wie in Figur 5 gezeigt, mehrere Sekundärteile 112 nebeneinander angeordnet werden können, wobei die einander zugewandten Schmalseiten 128 der Magnetkörper 120 bzw. der Ersatzkörper 124 aneinander angrenzen.

In der Figur 4 ist ein erfindungsgemäßer Linearmotor 100 gezeigt, der ein Sekundärteil 112 mit der Magnetrückschlussschiene 118 und den Magnetkörpern 120 sowie den Ersatzkörpern 124 aufweist und der ein bestrombares Primärteil 114 vorsieht. Im Primärteil 114 sind vorzugsweise drei, sechs oder neun Spulen zur Ausbildung von Magnetfeldern vorgesehen und derart angeordnet, dass die einzelnen Magnetspulen nacheinander derart bestromt werden, dass das Primärteil entlang der vorgegebenen Bewegungsrichtung bewegt wird.

Die Ersatzkörper 124 weisen Durchgangslöcher 130 auf, in welchen Befestigungsschrauben 132 vorgesehen sind. Die Durchgangslöcher 130 korrespondieren mit in der Magnetrückschlussschiene 118 vorgesehenen Befestigungslöchern 134, so dass die Schrauben 132 durch die Durchgangslöcher 130 und die Befestigungslöcher 134 hindurchragen. Die Schraubenköpfe der Schrauben 132 sind dabei derart, dass sie nicht über die dem Primärteil 114 zugewandte Oberfläche der Ersatzkörper 124 hinausragen.

Mit den Schrauben 132 können folglich die Magnetkörper 120 und die Magnetrückschlussschiene 118 an einem in Figuren 4 gezeigten Basisteil 140 befestigt werden.

Figur 5 zeigt drei lückenlos nebeneinander angeordnete Sekundärteile 112', 112'' und 112'" zur Bildung eines großflächigen Sekundärteils.

Der eine in der Figur 3 gezeigte, zwischen den Magnetkörpern 120.1 und 120.2 liegende Ersatzkörper 124 weist zwischen den Durchgangslöchern 130 ein weiteres Loch mit einer Befestigungsschraube 136 auf. Mit der Befestigungsschraube 136 kann der Ersatzkörper 124 an der Magnetrückschlussschiene 118 vormontiert werden, bevor die Magnetrückschlussschiene 118 mit den Magnetkörpern 120 mittels den Schrauben 132 an dem in Figur 4 gezeigten Basisteil 140 befestigt wird.
Auch wenn die in den Figuren 3, 4 und 5 gezeigten Magnetkörper 124 senkrecht zur Achse 116 verlaufend angeordnet sind, ist denkbar, dass die Magnetkörper 120 und die Ersatzkörper 124 leicht schräg, entsprechend der Ausbildung gemäß Figur 2, zur Längsachse 116 verlaufend ausgebildet sind. Dadurch kann ein verbessertes Anfahrverhalten des Primärteils 114 erreicht werden.

Die Ersatzkörper 124 können auch aus einem nicht-ferromagnetischen Material bestehen, wobei dann insbesondere die Befestigungsschrauben 132 aus einem ferromagnetischen Material bestehen können. Es hat sich herausgestellt, dass bei Verwendung von den Ersatzkörpern 124 anstelle von den Magnetkörpern 120 der Wirkungsgrad des Linearmotors 100 lediglich geringfügig verschlechtert wird; bei einer Anordnung wie sie in Figur 3 gezeigt ist, bei der zwischen zwei Ersatzkörpern 124 sechs Magnetkörper 120 vorgesehen sind, ist die Verschlechterung des Wirkungsgrades so gering, dass die daraus resultierenden Auswirkungen auf das Verhalten des Linearmotors 100 nicht oder kaum spürbar sind. Dadurch, dass die Schrauben 132 und/oder die Ersatzkörper 124 aus ferromagnetischem Material sind, kann beim Betreiben des Linearmotors 100 auch durch die Ersatzkörper 124 bzw. durch die Schrauben 132 ein ausreichender magnetischer Fluss fließen.

## Patentansprüche

1. Sekundärteil (112) für einen Linearmotor (100), wobei das Sekundärteil (112) eine entlang einer Achse (116) verlaufende Magnetrückschlussschiene (118) und eine Vielzahl von an der Magnetrückschlussschiene (118) vorgesehenen, quer oder schräg zur Achse (116) verlaufend angeordneten, permanentmagnetisierten Magnetkörpern (120) zum Zusammenwirken mit einem Primärteil (114) aufweist, wobei zwischen jeweils zwei Magnetkörpern (120) mit gleicher Polarisierung ein Magnetkörper (120) mit anderer Polarisierung vorgesehen ist, **dadurch gekennzeichnet, dass** wenigstens zwischen zwei Magnetkörpern (120) mit gleicher Polarisierung ein nicht permanentmagnetisierter Ersatzkörper (124) vorgesehen ist.

2. Sekundärteil (112) nach Anspruch 1, **dadurch gekennzeichnet, dass** die sich quer zur Achse (116) erstreckende Breite der Magnetrückschlussschiene (118) gleich oder kleiner ist als die sich quer zur Achse (116) erstreckende Breite (126) der Magnetkörper (120).

3. Sekundärteil (112) nach Anspruch 1 oder 2, **dadurch gekennzeichnet, dass** die Magnetkörper (120) und die Ersatzkörper (124) jeweils Längsseiten und Schmalseiten (124) aufweisen und dass die Ausbildung so ist, dass bei zwei nebeneinander angeordneten Sekundärteilen (112', 112", 112"') die einander zugewandte Schmalseiten (124) aneinander angrenzen.

4. Sekundärteil (112) nach Anspruch 1, 2 oder 3, **dadurch gekennzeichnet, dass** der wenigstens eine Ersatzkörper (124) aus einem ferromagnetischen Material, insbesondere aus einem Eisen- oder Stahlmaterial ist.

5. Sekundärteil (112) nach einem der vorhergehenden Ansprüche, **dadurch gekennzeichnet, dass** der wenigstens eine Ersatzkörper (124) die gleichen Abmessungen wie die benachbarten Magnetkörper (120) aufweist.

6. Sekundärteil (112) nach einem der vorhergehenden Ansprüche, **dadurch gekennzeichnet, dass** der wenigstens eine Ersatzkörper (124) wenigstens ein Durchgangsloch (130) und dass die Magnetrückschlussschiene (118) wenigstens ein mit dem Durchgangsloch (130) korrespondierendes Befestigungsloch (134) derart aufweist, und der wenigstens eine Ersatzkörper (124) mittels Befestigungsschrauben (132) an der Magnetrückschlussschiene (118) und/oder die Magnetrückschlussschiene (118) an einem Basisteil (140) befestigt oder befestigbar ist.

7. Sekundärteil (112) nach Anspruch 6, **dadurch gekennzeichnet, dass** der wenigstens eine Ersatzkörper (124) aus einem nicht-ferromagnetischen Material und die Befestigungsschrauben (132) aus einem ferromagnetischen Material sind.

8. Sekundärteil (112) nach einem der vorhergehenden Ansprüche, **dadurch gekennzeichnet, dass** die Magnetkörper (120) mittels einer Klebeverbindung an oder auf der Magnetrückschlussschiene (118) befestigt sind.

9. Sekundärteil (112) nach einem der vorhergehenden Ansprüche, **dadurch gekennzeichnet, dass** entlang der Achse (116) jeweils zwischen zwei Ersatzkörpern (124) 3, 4, 5, 6 oder 7 Magnetkörper (120) vorgesehen sind.

10. Linearmotor (100) umfassend ein Sekundärteil (112) nach einem der vorhergehenden Ansprüche und ein bestrombares Primärteil (114), das entlang des Sekundärteils (112) verfahrbar angeordnet ist.

11. Linearmotor (100) umfassend mehrere hintereinander und/oder nebeneinander angeordnete Sekundärteile (112, 112', 112", 112"')).

12. Baukasten für einen Linearmotor (100) nach einem der Ansprüche 9 oder 10, mit einem Primärteil (114) und einer Auswahl von mehreren Sekundärteilen (112, 112', 112", 112"').
